# EUROPEAN PATENT APPLICATION

(11) **EP 4 329 410 A1**
(43) Date of publication of application: **28.02.2024**
(21) Application number: 22885320.6
(22) Date of filing: 15.08.2022
(51) Int. Cl.: H04W 72/04, H04W 72/54, H04L 1/00

(54) **MU-MIMO SYSTEM SCHEDULING METHOD AND APPARATUS, AND ELECTRONIC APPARATUS AND STORAGE MEDIUM**

(30) Priority: 25.10.2021 CN 202111242160
(71) Applicant: Sunwave Communications Co., Ltd., Hangzhou, Zhejiang 310053 (CN); BTI Wireless Ltd, Kowloon Bay, Hong Kong 999077 (HK); Bravo Tech Inc., La Mirada, California 90638 (US)
(72) Inventor: WANG, Weiqiao, Hangzhou, Zhejiang 310053 (CN); BIAN, Yanchun, Hangzhou, Zhejiang 310053 (CN); LI, Kai, Hangzhou, Zhejiang 310053 (CN); LIANG, Gang, Hangzhou, Zhejiang 310053 (CN)
(74) Representative: Grassi, Stefano
(86) International application number: PCT/CN2022/112498
(87) International publication number: WO 2023/071420

(57) **Abstract**

A scheduling method and apparatus for an MU-MIMO system, an electronic apparatus, and a storage medium. The method comprises: acquiring a paired user group (30); receiving first uplink data from a first user (21), and receiving second uplink data from a second user (22); performing cyclic redundancy check after respectively demodulating the first uplink data and the second uplink data; when the first uplink data and the second uplink data are both successfully checked, scheduling the same resource for the first user (21) and the second user (22) according to a resource demand amount of the paired user group (30); and when checking of the first uplink data and/or the second uplink data fails, adjusting a pairing relationship of the paired user group (30).

## Description

### Cross-Reference to Related Application

The present disclosure claims priority to Chinese Patent Application No. 202111242160.3, filed on October 25, 2021 and entitled "Scheduling Method and Apparatus for MU-MIMO System, Electronic Apparatus and Storage Medium", which is incorporated herein by reference in its entirety.

### Technical Field

The present disclosure relates to the technical field of device charging, and in particular, to a scheduling method and apparatus for an MU-MIMO system, an electronic apparatus, and a storage medium.

### Background

MU-MIMO (Multi User Multiple-Input Multiple-Output, MU-MIMO for short) means that, in a wireless communication system, one base station simultaneously serves a plurality of mobile terminals, and the base station simultaneously communicates with a plurality of users by fully utilizing space domain resources of antennas.

An uplink MU-MIMO (i.e. Up Link MU-MIMO) system mainly schedules space division multiplex data among different users, the users transmit data information by sharing same time-frequency resource, to form a virtual MIMO (Multiple-Input Multiple-Output, MIMO for short) channel; the base station improves uplink spectrum efficiency by improving a multi-user diversity gain, thereby achieving gain and improvement of system traffic, which is an important multi-antenna processing technology, and plays an important role in base station system design and implementation.

In a current uplink MU-MIMO processing flow, usually, the base station determines, according to scheduling information of a user equipment (UE) and a certain judgment criterion, whether to schedule the same resource to different users, and performs corresponding pairing processing on different users, thereby implementing space division multiplex on spatial dimension resources, and achieving the improvement of system performance.

When the base station performs resource scheduling on different UEs, MU-MIMO grouping and pairing are performed at the same resource block (RB for short) position on the same transmission time interval (TTI for short). However, such a technical solution usually focuses on calculation of pairing relationships, but has inadequate considerations on problems such as channel quality deterioration and interference, etc. brought about by pairing itself, which causes reduction of packet scheduling performance in the MU-MIMO system.

### Summary

According to various embodiments of the present disclosure, a scheduling method and apparatus for an MU-MIMO system, an electronic apparatus, and a storage medium are provided.

According to a first aspect, embodiments of the present disclosure provide a scheduling method for an MU-MIMO system, the method comprising: acquiring a paired user group, wherein the paired user group comprises a first user and a second user wherein a pairing relationship between the first user and the second user has been determined; receiving first uplink data from the first user, and receiving second uplink data from the second user; performing cyclic redundancy check after respectively demodulating the first uplink data and the second uplink data; when the first uplink data and the second uplink data are both successfully checked, scheduling the same resource for the first user and the second user according to a resource demand amount of the paired user group; and when checking of the first uplink data and/or the second uplink data fails, adjusting the pairing relationship of the paired user group.

In some embodiments, acquiring a paired user group comprises: selecting, from a preset user candidate list, a first user and a plurality of users to be paired which have the same channel modulation mode as that of the first user; when the maximum value between a resource demand amount of a user to be paired and a resource demand amount of the first user is less than a sum of a resource demand amount planned value of the user to be paired and a resource demand amount planned value of the first user, calculating a difference absolute value between the resource demand amount of the user to be paired and the resource demand amount of the first user; and selecting, from the plurality of users to be paired, a user to be paired which has the minimum difference absolute value between the resource demand amount thereof and the resource demand amount of the first user as the second user, to obtain the paired user group.

In some embodiments, the method further comprises: acquiring an MCS index value of a candidate user; determining whether the MCS index value of the candidate user is greater than a preset first threshold; if the MCS index value of the candidate user is greater than the preset first threshold, determining whether the candidate user is merely used for sending CQI information; if the candidate user is not merely used for sending CQI information, determining whether difference values between the MCS value of the candidate user and MCS values of all users to be paired in the user candidate list are all less than a preset second threshold; and if the difference values between the MCS value of the candidate user and MCS values of all users to be paired in the user candidate list are all less than the second threshold, adding the candidate user as a user to be paired into the user candidate list.

In some embodiments, when checking of the first uplink data and/or the second uplink data fails, adjusting the pairing relationship of the paired user group, comprises: when checking of the first uplink data fails and checking of the second uplink data succeeds, performing power boosting on a sending channel corresponding to the first user, scheduling resources for the second user according to a resource demand amount of the second user, relieving the pairing relationship between the first user and the second user, and re-searching for a user to be paired which matches the first user; when checking of the first uplink data succeeds and checking of the second uplink data fails, performing power boosting on a sending channel corresponding to the second user, scheduling resources for the first user according to a resource demand amount of the first user, relieving the pairing relationship between the first user and the second user, and re-searching for a user to be paired which matches the second user; and when checking of both the first uplink data and the second uplink data fails, adjusting the pairing relationship of the paired user group according to the number of retransmissions of currently transmitted data of the first user and the second user.

In some embodiments, adjusting the pairing relationship of the paired user group according to the number of retransmissions of currently transmitted data of the first user and the second user, comprises: hen currently transmitted data of the first user and the second user is both newly transmitted data, scheduling resources for the first user and the second user respectively according to resource demand amounts of the first user and the second user, using non-adaptive retransmission when determining that the first user and the second user perform first data retransmission, and recording a first signal-to-noise ratio of newly transmitted data of the first user and a second signal-to-noise ratio of newly transmitted data of the second user; when the currently transmitted data of the first user and the second user is both first retransmission data, scheduling resources for the first user and the second user respectively according to the resource demand amounts of newly transmitted data of the first user and the second user; recording a third signal-to-noise ratio when the first user performs first data retransmission and a fourth signal-to-noise ratio when the second user performs second data retransmission, and adjusting the pairing relationship of the paired user group according to a magnitude relationship between the third signal-to-noise ratio and the first signal-to-noise ratio and a magnitude relationship between the fourth signal-to-noise ratio and the second signal-to-noise ratio; and hen the currently transmitted data of the first user and the second user is both second retransmission data, scheduling resources for the first user and the second user respectively according to the resource demand amounts of the first user and the second user when performing first data retransmission, relieving the pairing relationship between the first user and the second user, using adaptive retransmission when a user with the lowest signal-to-noise ratio retransmits data upon determining newly transmitted data in the first user and the second user, and re-searching for a user to be paired which matches the first user and a user to be paired which matches the second user.

In some embodiments, adjusting the pairing relationship of the paired user group according to a magnitude relationship between the third signal-to-noise ratio and the first signal-to-noise ratio and a magnitude relationship between the fourth signal-to-noise ratio and the second signal-to-noise ratio comprises: when a difference value between the first signal-to-noise ratio and the third signal-to-noise ratio and a difference value between the second signal-to-noise ratio and the fourth signal-to-noise ratio are both greater than a preset third threshold, relieving the pairing relationship between the first user and the second user, and using adaptive retransmission when it is determined that the user with the lowest signal-to-noise ratio of newly transmitted data in the first user and the second user performs second data retransmission; and when at least one of the difference value between the first signal-to-noise ratio and the third signal-to-noise ratio and the difference value between the second signal-to-noise ratio and the fourth signal-to-noise ratio is smaller than the third threshold, using non-adaptive retransmission when it is determined that the first user and the second user perform second data retransmission.

In some embodiments, scheduling the same resource for the first user and the second user according to a resource demand amount of the paired user group comprises: acquiring, from a preset orthogonal reference signal group, an orthogonal reference signal pair corresponding to the paired user group; updating user parameter information of the paired user group according to the orthogonal reference signal pair, and scheduling the same resource for the paired user group; and updating a resource bitmap according to the scheduling resource of the paired user group, and allocating DCI to the paired user group.

In a second aspect, embodiments of the present disclosure further provide a scheduling apparatus for an MU-MIMO system, the apparatus comprising: an acquisition module, configured to acquire a paired user group, wherein the paired user group comprises a first user and a second user wherein a pairing relationship between the first user and the second user has been determined; a receiving module, configured to receive first uplink data from the first user, and receive second uplink data from the second user; a checking module, configured to perform cyclic redundancy check after respectively demodulating the first uplink data and the second uplink data; and a scheduling module, configured to when the first uplink data and the second uplink data are both successfully checked, schedule the same resource for the first user and the second user according to a resource demand amount of the paired user group; and when checking of the first uplink data and/or the second uplink data fails, adjust the pairing relationship of the paired user group.

In a third aspect, embodiments of the present disclosure further provide an electronic apparatus, comprising a memory and a processor, wherein the memory stores a computer program, and the processor is configured to run the computer program to execute the scheduling method for an MU-MIMO system according to the first aspect as described above.

In a fourth aspect, embodiments of the present disclosure further provide a storage medium, wherein the storage medium stores a computer program, and when executed by a processor, the computer program implements the scheduling method for an MU-MIMO system according to the first aspect as described above.

Details of one or more embodiments of the present disclosure are proposed in the accompanying drawings and the description below. Other features, objects and advantages of some embodiments of the present disclosure will become apparent from the description, the accompanying drawings, and the claims.

### Brief Description of the Drawings

For better description and illustration of those applied embodiments and/or examples disclosed herein, reference may be made to one or more of the accompanying drawings. Additional details or examples used to describe the accompanying drawings should not be considered as limiting of the scope of any one of the disclosed application, the currently described embodiments and/or examples, and these currently understood best modes as applied.
Fig. 1 is a schematic diagram of an architecture of an MU-MIMO system in accordance with one or more embodiments.
Fig. 2 is a flowchart of a scheduling method for an MU-MIMO system in accordance with one or more embodiments.
Fig. 3 is a flowchart of a user pairing processing method for an MU-MIMO system in accordance with one or more embodiments.
Fig. 4 is a flowchart of a user candidate processing method for an MU-MIMO system according to one or more embodiments.
Fig. 5 is a flowchart of a feedback information processing method for an MU-MIMO system in accordance with one or more embodiments.
Fig. 6 is a flowchart of a feedback information processing method for an MU-MIMO system in accordance with one or more embodiments.
Fig. 7 is a flowchart of a resource scheduling processing method for an MU-MIMO system in accordance with one or more embodiments.
Fig. 8 is a structural block diagram of a scheduling apparatus for an MU-MIMO system according to one or more embodiments.
Fig. 9 is a schematic diagram of a structure of an electronic apparatus in accordance with one or more embodiments.

### Detailed Description of the Embodiments

To make the objectives, technical solutions, and advantages of the present disclosure clearer, hereinafter, the present disclosure will be described and illustrated with reference to the accompanying drawings and embodiments. It should be understood that the specific embodiments described herein are only used to explain the present disclosure, and are not intended to limit the present disclosure. All other embodiments obtained by a person of ordinary skill in the art on the basis of the embodiments of the present disclosure without any inventive effort shall all fall within the scope of protection of the present disclosure. In addition, it should also be understood that, although efforts made in such a development process may be complex and tedious, for a person of ordinary skill in the art related to the content disclosed in the present disclosure, some changes such as design, manufacture, or production, etc. made on the basis of the technical content disclosed in the present disclosure are merely conventional technical means, and shall not be understood as the content disclosed in the present disclosure being insufficient.

Reference to "an embodiment" in the present disclosure means that a particular feature, structure, or characteristic described in connection with the embodiment can be included in at least one embodiment of the present disclosure. The appearance of this phrase in various places in the description does not necessarily refer to the same embodiment, nor separate or alternative embodiments mutually exclusive of other embodiments. A person of ordinary skill in the art would explicitly and implicitly understand that the embodiments described in the present disclosure can be combined with other embodiments without conflicts.

Unless defined otherwise, all technical terms or scientific terms used in the present disclosure shall have common meanings as understood by a person of ordinary skill in the art to which the present disclosure belongs. Similar words such as "a", "an", "a type of" and "the" and the like involved in the present disclosure do not represent limitation to the number, and may represent a singular number or a plural number. The terms "comprise", "comprising", "having", and any variations thereof as referred to in the present disclosure are intended to cover non-exclusive inclusions; For example, a process, method, system, product or device that comprises a series of steps or modules (units) is not limited to the steps or units listed, but may comprise steps or units not listed, or may further comprise other steps or units inherent to the process, method, product or device. Similar words such as "connected", "connected to", "coupled", and the like, as referred to in the present disclosure, are not limited to physical or mechanical connections, but may comprise electrical connections, whether direct or indirect. "A plurality of" involved in the present disclosure means greater than two or equal to two. "And/or" describes an association relationship between associated objects, indicating that three relationships may exist, for example, "A and/or B" may indicate three cases: A exists individually, both A and B exist, and B exists individually. The terms "first", "second", "third" and the like involved in the present disclosure are merely used to distinguish similar objects, and do not represent a particular sequence of the objects.

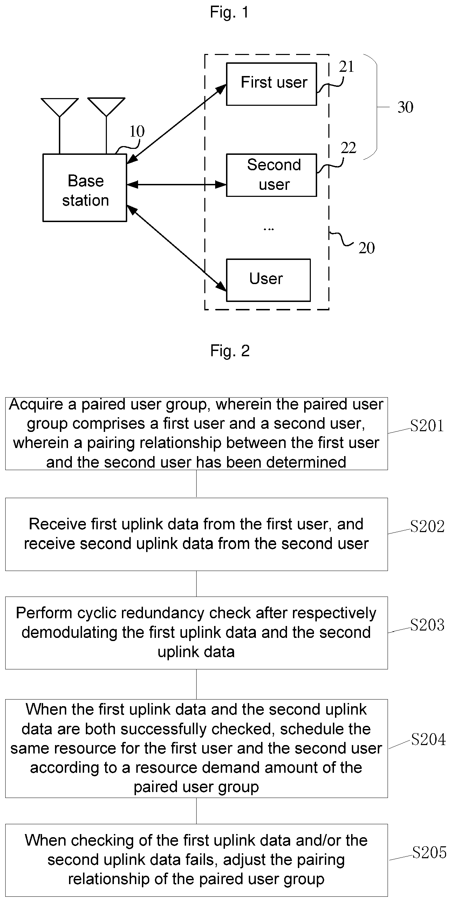

Fig. 1 is a schematic diagram of an architecture of an MU-MIMO system in accordance with embodiments of the present disclosure. As shown in Fig. 1, the MU-MIMO system comprises a base station 10 and a plurality of users 20; the base station 10 transmits data with the plurality of users 20 by a plurality of antennas; and the base station 10 and the plurality of users 20 can be connected in a wireless manner.

In the present embodiment, the base station 10 achieves allocation of uplink time-frequency resources between the base station 10 and the plurality of users 20 by means of resource scheduling; the base station 10 can schedule users 20 in a paired user group 30 which are paired successfully onto the same time-frequency resource; and during resource scheduling, the base station 10 allocates resources according to a resource demand amount of the paired user group 30.

The present embodiment provides a scheduling method for an MU-MIMO system. Fig. 2 is a flowchart of a scheduling method for an MU-MIMO system in accordance with embodiments of the present disclosure. As shown in Fig. 2, the method comprises:
step S201, acquiring a paired user group 30, wherein the paired user group 30 comprises a first user 21 and a second user 22 wherein a pairing relationship between the first user and the second user has been determined.

In the present embodiment, the MU-MIMO system mainly considers optimal improvement of performance under resource-constrained conditions; therefore, when a resource demand amount is greater than a resource available amount, pairing processing may be performed on the users, and the resource demand amount may be represented by the demand number of resource blocks (RB for short).

Step S202, receiving first uplink data from the first user 21, and receiving second uplink data from the second user 22.

Step S203, performing cyclic redundancy check after respectively demodulating the first uplink data and the second uplink data.

The cyclic redundancy check (CRC for short) is a hash function for generating a short fixed number of bits of a check code according to data such as a network data packet or a computer file, and is mainly used for detecting or checking an error that may occur after data transmission or storage.

In the present embodiment, by performing CRC after demodulating the first uplink data and the second uplink data, it can be determined whether error occurs in data transmission of the first uplink data and/or the second uplink data, and then it is determined whether anomalous situations such as power reduction and interference occur in a sending channel corresponding to the first uplink data and the second uplink data.

Step S204, when the first uplink data and the second uplink data are both successfully checked, scheduling the same resource for the first user 21 and the second user 22 according to a resource demand amount of the paired user group 30.

Step S205, when checking of the first uplink data and/or the second uplink data fails, adjusting the pairing relationship of the paired user group 30.

In the present embodiment, when both the first uplink data and the second uplink data are successfully checked, it can be determined that no anomalous situations such as power reduction and interference, etc. occur in sending channels corresponding to the first uplink data and the second uplink data, and then it can be determined that the pairing relationship between the first user 21 and the second user 22 has no negative effects such as channel quality deterioration and interference, etc. on the uplink. Therefore, the base station can schedule the same resource for the first user 21 and the second user 22 according to the resource demand amount of the paired user group 30.

In the embodiment, if checking of the first uplink data and/or the second uplink data fails, it can be determined that anomalous situations such as power reduction and interference, etc. occur in sending channels corresponding to the first uplink data and/or the second uplink data, and then it can be determined that the pairing relationship between the first user 21 and the second user 22 has negative effects such as channel quality deterioration and interference, etc. on the uplink. The situation that the pairing relationship between the first user 21 and the second user 22 has negative effects can be fed back to the base station, and the base station needs to adjust the pairing relationship of the paired user group 30. For example, the pairing relationship between the first user 21 and the second user 22 is released, and a matching user to be paired is searched for the first user 21 and/or the second user 22 again, then re-pairing processing is performed for the first user 21 and/or the second user 22, so as to prevent the pairing relationship between the first user 21 and the second user 22 from continuing to have negative effects, such as channel quality deterioration and interference, on the uplink corresponding thereto, thereby improving the packet scheduling performance of the MU-MIMO system.

By steps S201 to S205, by acquiring a paired user group 30, wherein the paired user group 30 comprises a first user 21 and a second user 22 wherein a pairing relationship between the first user and the second user has been determined; receiving first uplink data from the first user 21, and receiving second uplink data from the second user 22; performing cyclic redundancy check after respectively demodulating the first uplink data and the second uplink data; when the first uplink data and the second uplink data are both successfully checked, scheduling the same resource for the first user 21 and the second user 22 according to a resource demand amount of the paired user group 30; and when checking of the first uplink data and/or the second uplink data fails, adjusting the pairing relationship of the paired user group 30; the base station continues to schedule the same resource for the first user 21 and the second user 22 according to the pairing relationship when the pairing relationship between the first user 21 and the second user 22 has no negative effects such as channel quality deterioration and interference on the uplink; and when the pairing relationship between the first user 21 and the second user 22 has negative effects on the uplink, the pairing relationship between the first user 21 and/or the second user 22 is adjusted, thereby avoiding reduction of packet scheduling performance of the MU-MIMO system. The present disclosure solves the problem in the related art that packet scheduling performance of an MU-MIMO system is low, and achieves the technical effect of improving the packet scheduling performance of the MU-MIMO system.

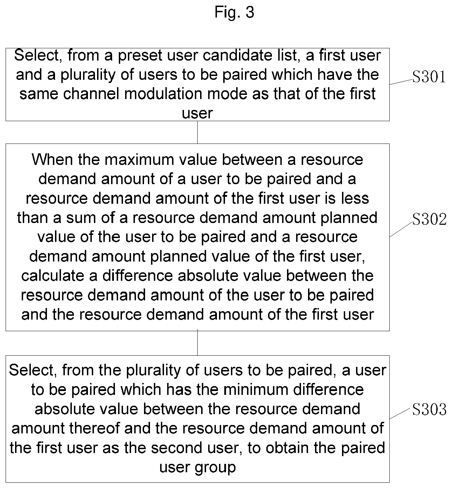

Fig. 3 is a flowchart of a user pairing processing method for an MU-MIMO system according to embodiments of the present disclosure. As shown in Fig. 3, in some embodiments, acquiring a paired user group 30 is implemented by the following steps:
step S301, selecting, from a preset user candidate list, a first user 21 and a plurality of users to be paired which have the same channel modulation mode as that of the first user 21.

Step S302, when the maximum value between a resource demand amount of a user to be paired and a resource demand amount of the first user 21 is less than a sum of a resource demand amount planned value of the user to be paired and a resource demand amount planned value of the first user 21, calculating a difference absolute value between the resource demand amount of the user to be paired and the resource demand amount of the first user 21.

Step S303, selecting, from the plurality of users to be paired, a user to be paired which has the minimum difference absolute value between the resource demand amount thereof and the resource demand amount of the first user 21 as the second user 22, to obtain the paired user group 30.

In the present embodiment, the resource demand amount of the MU-MIMO system needs to be larger than a resource available amount, that is, the packet scheduling performance is improved under resource-constrained conditions.

In the present embodiment, the users to be paired which have not been paired may be selected from the user candidate list in a traversing manner, the first user 21 UE1 can be selected, and any user to be paired UE2 is obtained by searching.

If the maximum value between the resource demand amount RB1 of the UE1 and the resource demand amount RB2 of the UE2 is less than a sum of resource demand amount planned values of the UE1 and the UE2, then processing is continued; otherwise, a next user to be paired is indexed to perform pairing processing with the UE1 again.

If the maximum value between the resource demand amount RB1 of the UE1 and the resource demand amount RB2 of the UE2 is less than a sum of resource demand amount planned values of the UE1 and the UE2, difference absolute value |RB1-RB2| between RB1 and RB2 can be calculated, and a user to be paired which has the minimum difference absolute value among the plurality of users to be paired is reserved as a second user 22, so as to obtain the paired user group 30. After all the users to be paired in the user candidate list are traversed, a pairing relationship result of each user to be paired is recorded.

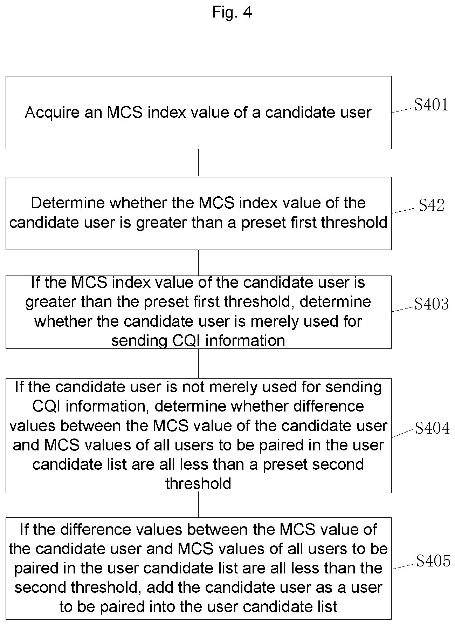

Fig. 4 is a flowchart of a user candidate processing method for an MU-MIMO system according to embodiments of the present disclosure. As shown in Fig. 4, in some embodiments, acquiring a user candidate list may be implemented by the following steps:
step S401, acquiring an MCS index value of a candidate user.

Step S402, determining whether the MCS index value of the candidate user is greater than a preset first threshold.

Step S403, if the MCS index value of the candidate user is greater than the preset first threshold, determining whether the candidate user is merely used for sending CQI information.

Step S404, if the candidate user is not merely used for sending CQI information, determining whether difference values between the MCS value of the candidate user and MCS values of all users to be paired in the user candidate list are all less than a preset second threshold.

Step S405, if the difference values between the MCS value of the candidate user and MCS values of all users to be paired in the user candidate list are all less than the second threshold, adding the candidate user as a user to be paired into the user candidate list.

In the present embodiment, it is necessary to determine whether an MCS (Modulation and Coding Scheme, MCS for short) index value generated according to a channel quality measurement value is greater than the preset first threshold. In view of the fact that a gain brought about by far-point user pairing is not significant, near-point and mid-point users can be taken as main users, and the first threshold may be set to 6, that is, when the MCS index value of the candidate user is not greater than 6, pairing processing is not performed on the candidate user.

In the embodiment, since pairing gain between users with close channel conditions is more obvious and has less interference, it can be restricted that the channel modulation modes (Modulation Order) of the users to be paired are the same; and in the present embodiment, the channel modulation modes of the plurality of users to be paired in the user candidate list are all the same.

In the present embodiment, as the data amount of CQI (Channel Quality Indication, CQI for short) information is small, gain brought about by resource multiplexing is not large. Furthermore, the CQI information is more easily affected by an interference factor, which causes a demodulation error; moreover, the CQI information is very important to the whole uplink scheduling processing flow; therefore, when a candidate user is merely used for sending CQI information, pairing processing is not performed on the candidate user.

In the present embodiment, space division multiplexing gain brought about by pairing of users with close channel conditions is more obvious. Therefore, in some embodiments, according to a protocol 36.213 table8.6.1-1, the difference between MCS index values of a plurality of users to be paired in the same modulation mode may be set as a threshold 11, that is, the second threshold may be set as 11; and when at least one difference among differences between the MCS value of the candidate user and MCS values of all users to be paired in the user candidate list is greater than 11, pairing processing is not performed on the candidate user.

In the embodiment, if the difference values between the MCS value of the candidate user and MCS values of all users to be paired in the user candidate list are all less than the second threshold, the candidate user is added as a user to be paired into the user candidate list.

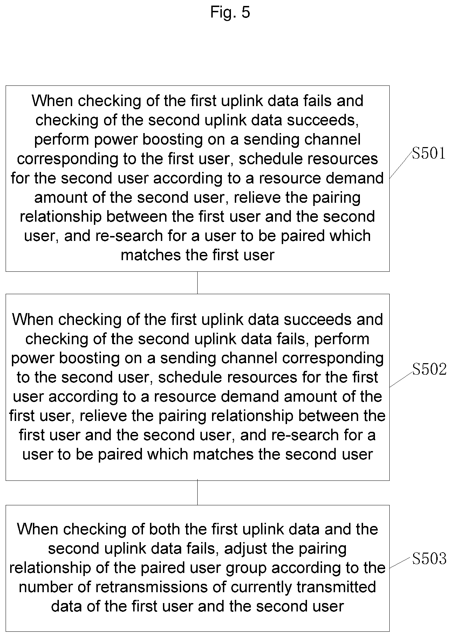

Fig. 5 is a flowchart of a feedback information processing method for an MU-MIMO system according to embodiments of the present disclosure. As shown in Fig. 5, in some embodiments, when checking of the first uplink data and/or the second uplink data fails, adjusting the pairing relationship of the paired user group 30, is implemented by the following steps:
step S501, when checking of the first uplink data fails and checking of the second uplink data succeeds, performing power boosting on a sending channel corresponding to the first user 21, scheduling resources for the second user 22 according to a resource demand amount of the second user 22, relieving the pairing relationship between the first user 21 and the second user 22, and re-searching for a user to be paired which matches the first user 21.

Step S502, when checking of the first uplink data succeeds and checking of the second uplink data fails, performing power boosting on a sending channel corresponding to the second user 22, scheduling resources for the first user 21 according to a resource demand amount of the first user 21, relieving the pairing relationship between the first user 21 and the second user 22, and re-searching for a user to be paired which matches the second user 22.

Step S503, when checking of both the first uplink data and the second uplink data fails, adjusting the pairing relationship of the paired user group 30 according to the number of retransmissions of currently transmitted data of the first user 21 and the second user 22.

In the present embodiment, if checking of the first uplink data fails and checking of the second uplink data succeeds, it can be determined that the sending channel of the first user 21 corresponding to the first uplink data is anomalous, a sending channel power of the sending channel corresponding to the first user 21 may be decreased due to the pairing relationship between the first user 21 and the second user 22, or interference is generated on the sending channel of the first user 21 due to the pairing relationship between the first user 21 and the second user 22. Therefore, power boosting can be performed on the sending channel corresponding to the first user 21, the pairing relationship between the first user 21 and the second user 22 is relieved, and a user to be paired which matches the first user 21 is re-searched for.

In the embodiment, if checking of the second uplink data fails and checking of the first uplink data succeeds, it is determined that the sending channel of the second user 22 is anomalous. Similarly, power boosting can be performed on the sending channel corresponding to the second user 22, the pairing relationship between the first user 21 and the second user 22 is relieved, and a user to be paired which matches the second user 22 is re-searched for.

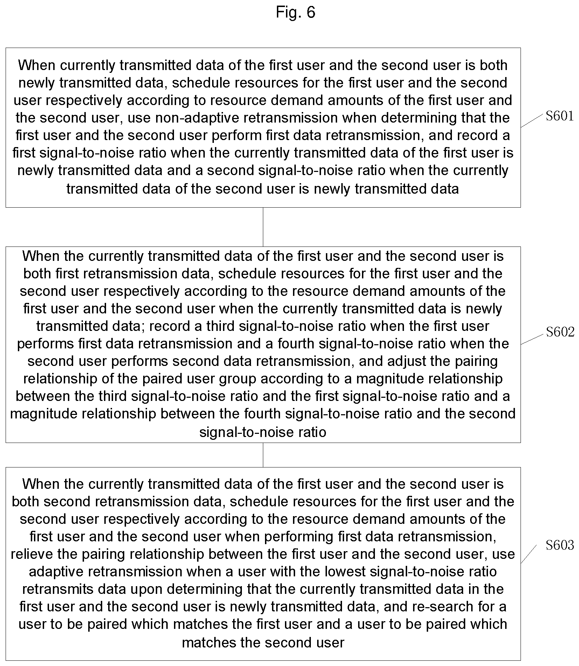

In the present embodiment, if checking of both the first uplink data and the second uplink data fail, pairing and retransmission processing needs to be performed. Fig. 6 is a flowchart of a feedback information processing method for an MU-MIMO system according to preferred embodiments of the present disclosure. As shown in Fig. 6, the pairing and retransmission processing may be implemented by the following steps:
Step S601, when currently transmitted data of the first user 21 and the second user 22 is both newly transmitted data, scheduling resources for the first user 21 and the second user 22 respectively according to resource demand amounts of the first user 21 and the second user 22, using non-adaptive retransmission when determining that the first user 21 and the second user 22 perform first data retransmission, and recording a first signal-to-noise ratio when the currently transmitted data of the first user 21 is newly transmitted data and a second signal-to-noise ratio when the currently transmitted data of the second user 22 is newly transmitted data.

Step S602, when the currently transmitted data of the first user 21 and the second user 22 is both first retransmission data, scheduling resources for the first user 21 and the second user 22 respectively according to the resource demand amounts of the first user 21 and the second user 22 when the currently transmitted data is newly transmitted data; recording a third signal-to-noise ratio when the first user 21 performs first data retransmission and a fourth signal-to-noise ratio when the second user 22 performs second data retransmission, and adjusting the pairing relationship of the paired user group 30 according to a magnitude relationship between the third signal-to-noise ratio and the first signal-to-noise ratio and a magnitude relationship between the fourth signal-to-noise ratio and the second signal-to-noise ratio.

Step S603, when the currently transmitted data of the first user 21 and the second user 22 is both second retransmission data, scheduling resources for the first user 21 and the second user 22 respectively according to the resource demand amounts of the first user 21 and the second user 22 when performing first data retransmission, relieving the pairing relationship between the first user 21 and the second user 22, using adaptive retransmission when a user with the lowest signal-to-noise ratio retransmits data upon determining that the currently transmitted data in the first user 21 and the second user 22 is newly transmitted data, and re-searching for a user to be paired which matches the first user 21 and a user to be paired which matches the second user 22.

In the present embodiment, adjusting the pairing relationship of the paired user group 30 according to a magnitude relationship between the third signal-to-noise ratio and the first signal-to-noise ratio and a magnitude relationship between the fourth signal-to-noise ratio and the second signal-to-noise ratio, may comprise: when a difference value between the first signal-to-noise ratio and the third signal-to-noise ratio and a difference value between the second signal-to-noise ratio and the fourth signal-to-noise ratio are both greater than a preset third threshold, relieving the pairing relationship between the first user 21 and the second user 22, and using adaptive retransmission when it is determined that the user with the lowest signal-to-noise ratio of newly transmitted data in the first user 21 and the second user 22 performs second data retransmission. When at least one of the difference value between the first signal-to-noise ratio and the third signal-to-noise ratio and the difference value between the second signal-to-noise ratio and the fourth signal-to-noise ratio is smaller than the third threshold, non-adaptive retransmission is used when it is determined that the first user 21 and the second user 22 perform second data retransmission.

In the embodiment, adaptive retransmission refers to that the retransmission can change resources and MCS index values used; and non-adaptive retransmission refers to that the retransmission must use the same resources and MCS index values as those used by the previous data transmission (newly-transmitted data or the previous retransmission).

In the present embodiment, if the currently transmitted data of the first user 21 and the second user 22 is first retransmission data, then the difference value DeltaSinr1 between the first signal-to-noise ratio and the third signal-to-noise ratio and the difference value DeltaSinr2 between the second signal-to-noise ratio and the fourth signal-to-noise ratio need to be calculated; the third threshold may be selected as 3 dB, when both DeltaSinr1 and DeltaSinr2 are greater than 3 dB, it is considered that the space division multiplexing gain brought about by the pairing relationship between the first user 21 and the second user 22 is not obvious, and then the pairing relation between the first user 21 and the second user 22 needs to be relieved.

In addition, when it is determined that the user with the lowest signal-to-noise ratio of newly transmitted data in the first user 21 and the second user 22 performs second data retransmission, adaptive retransmission is used, so as to find a better resource allocation.

In the present embodiment, if the currently transmitted data of the first user 21 and the second user 22 is second retransmission data, then it is necessary to relieve the pairing relationship between the first user 21 and the second user 22; moreover, when it is determined that the user with the lowest signal-to-noise ratio of newly transmitted data in the first user 21 and the second user 22 retransmits data, adaptive retransmission is used, and a user to be paired which matches the first user 21 and a user to be paired which matches the second user 22 are re-searched for. Relieving the pairing relationship is to enable the user to attempt data retransmission without interference before reaching retransmission failure, improving the success rate of retransmission data merging.

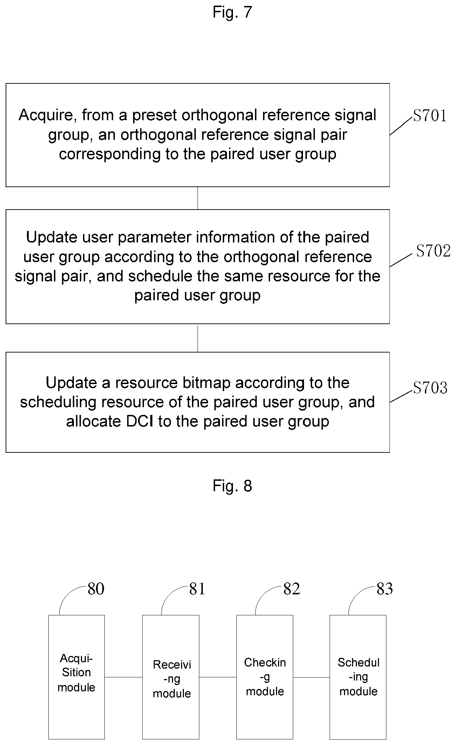

Fig. 7 is a flowchart of a resource scheduling processing method for an MU-MIMO system in accordance with embodiments of the present disclosure. As shown in Fig. 7, in some embodiments, scheduling the same resource for the first user 21 and the second user 22 according to a resource demand amount of the paired user group 30, is implemented by the following steps:
step S701, acquiring, from a preset orthogonal reference signal group, an orthogonal reference signal pair corresponding to the paired user group 30.

Step S702, updating user parameter information of the paired user group 30 according to the orthogonal reference signal pair, and scheduling the same resource for the paired user group 30.

Step S703, updating a resource bitmap according to the scheduling resource of the paired user group 30, and allocating DCI to the paired user group 30.

In the present embodiment, in order to enable the base station to distinguish different uplink signals of the two users, orthogonal demodulation reference signals (Dmrs for short) need to be allocated to the first user 21 and the second user 22 of which the pairing relationship has been established, and an orthogonal reference signal pair (nDmrs, nDmrs+6) corresponding to the paired user group 30 can be acquired from a preset orthogonal reference signal group according to a resource available amount.

User parameter information of the paired user group 30 can be updated according to the orthogonal reference signal pair, the same resource and modulation information are scheduled for the paired user group 30, a resource bitmap is updated according to the scheduling resource of the paired user group 30, and DCI (Downlink Control Information, DCI for short) is allocated to the paired user group 30.

The present embodiment provides a scheduling apparatus for an MU-MIMO system. Fig. 8 is a structural block diagram of a scheduling apparatus for an MU-MIMO system according to embodiments of the present disclosure. As shown in Fig. 8, the apparatus comprises: an acquisition module 80, configured to acquire a paired user group, wherein the paired user group comprises a first user and a second user wherein a pairing relationship between the first user and the second user has been determined; a receiving module 81, configured to receive first uplink data from the first user, and receive second uplink data from the second user; a checking module 82, configured to perform cyclic redundancy check after respectively demodulating the first uplink data and the second uplink data; and a scheduling module 83, configured to when the first uplink data and the second uplink data are both successfully checked, schedule the same resource for the first user and the second user according to a resource demand amount of the paired user group; and when checking of the first uplink data and/or the second uplink data fails, adjust the pairing relationship of the paired user group.

In some embodiments, the apparatus further comprises: a pairing module, configured to select, from a preset user candidate list, a first user and a plurality of users to be paired which have the same channel modulation mode as that of the first user; when the maximum value between a resource demand amount of a user to be paired and a resource demand amount of the first user is less than a sum of a resource demand amount planned value of the user to be paired and a resource demand amount planned value of the first user, calculate a difference absolute value between the resource demand amount of the user to be paired and the resource demand amount of the first user; and select, from the plurality of users to be paired, a user to be paired which has the minimum difference absolute value between the resource demand amount thereof and the resource demand amount of the first user as the second user, to obtain the paired user group.

In some embodiments, the apparatus further comprises: a candidate module, configured to acquire an MCS index value of a candidate user; determine whether the MCS index value of the candidate user is greater than a preset first threshold; if the MCS index value of the candidate user is greater than the preset first threshold, determine whether the candidate user is merely used for sending CQI information; if the candidate user is not merely used for sending CQI information, determine whether difference values between the MCS value of the candidate user and MCS values of all users to be paired in the user candidate list are all less than a preset second threshold; and if the difference values between the MCS value of the candidate user and MCS values of all users to be paired in the user candidate list are all less than the second threshold, add the candidate user as a user to be paired into the user candidate list.

In some embodiments, the scheduling module 83 is further configured to when checking of the first uplink data fails and checking of the second uplink data succeeds, perform power boosting on a sending channel corresponding to the first user, schedule resources for the second user according to a resource demand amount of the second user, relieve the pairing relationship between the first user and the second user, and re-search for a user to be paired which matches the first user; when checking of the first uplink data succeeds and checking of the second uplink data fails, perform power boosting on a sending channel corresponding to the second user, schedule resources for the first user according to a resource demand amount of the first user, relieve the pairing relationship between the first user and the second user, and re-search for a user to be paired which matches the second user; and when checking of both the first uplink data and the second uplink data fails, adjust the pairing relationship of the paired user group according to the number of retransmissions of currently transmitted data of the first user and the second user.

In some embodiments, the scheduling module 83 is further configured to when currently transmitted data of the first user and the second user is both newly transmitted data, schedule resources for the first user and the second user respectively according to resource demand amounts of the first user and the second user, us non-adaptive retransmission when determining that the first user and the second user perform first data retransmission, and record a first signal-to-noise ratio when the currently transmitted data of the first user is newly transmitted data and a second signal-to-noise ratio when the currently transmitted data of the second user is newly transmitted data; when the currently transmitted data of the first user and the second user is both first retransmission data, schedule resources for the first user and the second user respectively according to the resource demand amounts of the first user and the second user when the currently transmitted data is newly transmitted data; record a third signal-to-noise ratio when the first user performs first data retransmission and a fourth signal-to-noise ratio when the second user performs second data retransmission, and adjust the pairing relationship of the paired user group according to a magnitude relationship between the third signal-to-noise ratio and the first signal-to-noise ratio and a magnitude relationship between the fourth signal-to-noise ratio and the second signal-to-noise ratio; and when the currently transmitted data of the first user and the second user is both second retransmission data, schedule resources for the first user and the second user respectively according to the resource demand amounts of the first user and the second user when performing first data retransmission, relieve the pairing relationship between the first user and the second user, use adaptive retransmission when a user with the lowest signal-to-noise ratio retransmits data upon determining that the currently transmitted data in the first user and the second user is newly transmitted data, and re-search for a user to be paired which matches the first user and a user to be paired which matches the second user.

In some embodiments, the scheduling module 83 is further configured to when a difference value between the first signal-to-noise ratio and the third signal-to-noise ratio and a difference value between the second signal-to-noise ratio and the fourth signal-to-noise ratio are both greater than a preset third threshold, relieve the pairing relationship between the first user and the second user, and use adaptive retransmission when it is determined that the user with the lowest signal-to-noise ratio of newly transmitted data in the first user and the second user performs second data retransmission; and when at least one of the difference value between the first signal-to-noise ratio and the third signal-to-noise ratio and the difference value between the second signal-to-noise ratio and the fourth signal-to-noise ratio is smaller than the third threshold, non-adaptive retransmission is used when it is determined that the first user and the second user perform second data retransmission.

In some embodiments, the scheduling module 83 is further configured to acquire, from a preset orthogonal reference signal group, an orthogonal reference signal pair corresponding to the paired user group; update user parameter information of the paired user group according to the orthogonal reference signal pair, and schedule the same resource for the paired user group; and update a resource bitmap according to the scheduling resource of the paired user group, and allocate DCI to the paired user group.

It should be noted that, for specific examples in the present embodiment, reference can be made to the examples described in the described embodiments and optional embodiments, and thus they will not be repeated again in the present embodiment.

It should be noted that the modules above may be functional modules or program modules, and may be implemented by software or hardware. For modules implemented by hardware, the modules can be located in the same processor; or the modules can also be located in different processors in any arbitrary combination manner.

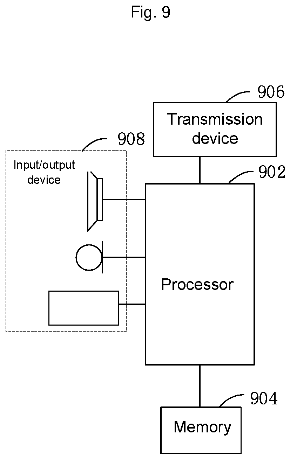

The present embodiment further provides an electronic apparatus. Fig. 9 is a schematic diagram of a hardware structure of an electronic apparatus according to embodiments of the present disclosure. As shown in Fig. 9, the electronic apparatus comprises a memory 904 and a processor 902, wherein the memory 904 stores a computer program, and the processor 902 is configured to run the computer program so as to execute the scheduling method for an MU-MIMO system in any one of the method embodiments above.

Specifically, the processor 902 may comprise a central processing unit (CPU), or an application specific integrated circuit (ASIC for short), or may be configured as one or more integrated circuits for implementing the embodiments of the present disclosure.

The memory 904 may comprise a large-capacity memory for data or instructions. By way of example but not limitation, the memory 904 may comprise a hard disk drive (HDD for short), a floppy disk drive, a solid state drive (SSD for short), a flash memory, an optical disc, a magneto-optical disc, a magnetic tape, or a Universal Serial Bus (USB for short) drive or a combination of two or more of these. The memory 904 may comprise a removable or non-removable (or fixed) medium, where appropriate. The memory 904 may be inside or outside of the scheduling apparatus for an MU-MIMO system, where appropriate. In particular embodiments, the memory 904 is a non-volatile memory. In particular embodiments, the memory 904 comprises a read-only memory (ROM for short) and a random access memory (RAM for short). Where appropriate, the ROM may be mask-programmed ROM, Programmable Read-Only Memory (PROM for short), Erasable Programmable Read-Only Memory (EPROM for short), Electrically Erasable Programmable Read-Only Memory (EEPROM for short), Electrically Alterable Read-Only Memory ROM (EAROM for short), or flash memory (FLASH for short), or a combination of two or more of these. Where appropriate, the RAM may be Static Random-Access Memory (SRAM for short) or Dynamic Random Access Memory (DRAM for short)), wherein the DRAM may be a Fast Page Mode Dynamic Random Access Memory (FPMDRAM for short), Extended Date Out Dynamic Random Access Memory (EDODRAM for short), and Synchronous Dynamic Random-Access Memory (SDRAM for short).

The memory 904 may be used to store or cache various data files that need to be processed and/or used in communications, as well as possibly computer program instructions that are executed by the processor 902.

The processor 902 implements the scheduling method for an MU-MIMO system in any one of the embodiments above by reading and executing computer program instructions stored in the memory 904.

Optionally, the electronic apparatus can further comprise a transmission device 906 and an input/output device 908, wherein the transmission device 906 is connected to the processor 902, and the input/output device 908 is connected to the processor 902.

Optionally, in the present embodiment, the processor 902 may be configured to execute the following steps by using the computer program:
S1, acquiring a paired user group, wherein the paired user group comprises a first user and a second user wherein a pairing relationship between the first user and the second user has been determined.
S2, receiving first uplink data from the first user, and receiving second uplink data from the second user.
S3, performing cyclic redundancy check after respectively demodulating the first uplink data and the second uplink data.
S4, when the first uplink data and the second uplink data are both successfully checked, scheduling the same resource for the first user and the second user according to a resource demand amount of the paired user group.
S5, when checking of the first uplink data and/or the second uplink data fails, adjusting the pairing relationship of the paired user group.

It should be noted that, for specific examples in the present embodiment, reference can be made to the examples described in the described embodiments and optional embodiments, and thus they will not be repeated again in the present embodiment.

In addition, embodiments of the present disclosure may provide a storage medium to implement the scheduling method for an MU-MIMO system in the embodiments above. A computer program is stored on the storage medium; the computer program implements, when being executed by a processor, the scheduling method for an MU-MIMO system in any one of the embodiments above.

A person skilled in the art should understand that various technical features of the embodiments above can be combined in any way, and in order to make the description brief, not all possible combinations of the technical features of the embodiments are described. However, as long as the combination of these technical features is not contradictory, the technical features should be considered to fall within the scope disclosed in the description.

The embodiments above merely represent several embodiments of the present disclosure, and the description thereof is specific and detailed, but the specific and detailed description cannot be understood as limiting the scope of the present disclosure. It should be noted that for a person of ordinary skill in the art, several modifications and improvements can be made without departing from the concept of the present disclosure, and all these modifications and improvements fall within the scope of protection of the present disclosure. Therefore, the scope of protection of the present disclosure shall be subject to the appended claims.

## Claims

1. A scheduling method for an MU-MIMO system, comprising:
acquiring a paired user group, wherein the paired user group comprises a first user and a second user, wherein a pairing relationship between the first user and the second user has been determined;
receiving first uplink data from the first user, and receiving second uplink data from the second user;
performing cyclic redundancy check after respectively demodulating the first uplink data and the second uplink data;
when the first uplink data and the second uplink data are both successfully checked, scheduling the same resource for the first user and the second user according to a resource demand amount of the paired user group; and
when checking of the first uplink data and/or the second uplink data fails, adjusting the pairing relationship of the paired user group.

2. The scheduling method for an MU-MIMO system according to claim 1, wherein acquiring a paired user group comprises:
selecting, from a preset user candidate list, a first user and a plurality of users to be paired which have a same channel modulation mode as that of the first user;
when the maximum value between a resource demand amount of a user to be paired and a resource demand amount of the first user is less than a sum of a resource demand amount planned value of the user to be paired and a resource demand amount planned value of the first user, calculating a difference absolute value between the resource demand amount of the user to be paired and the resource demand amount of the first user; and
selecting, from the plurality of users to be paired, a user to be paired which has the minimum difference absolute value between the resource demand amount thereof and the resource demand amount of the first user as the second user, to obtain the paired user group.

3. The scheduling method for an MU-MIMO system according to claim 2, wherein the method further comprises:
acquiring an MCS index value of a candidate user;
determining whether the MCS index value of the candidate user is greater than a preset first threshold;
if the MCS index value of the candidate user is greater than the preset first threshold, determining whether the candidate user is merely used for sending CQI information;
if the candidate user is not merely used for sending CQI information, determining whether difference values between the MCS value of the candidate user and MCS values of all users to be paired in the user candidate list are all less than a preset second threshold; and
if the difference values between the MCS value of the candidate user and MCS values of all users to be paired in the user candidate list are all less than the second threshold, adding the candidate user as a user to be paired into the user candidate list.

4. The scheduling method for an MU-MIMO system according to any one of claims 1-3, wherein when checking of the first uplink data and/or the second uplink data fails, adjusting the pairing relationship of the paired user group, comprises:
when checking of the first uplink data fails and checking of the second uplink data succeeds, performing power boosting on a sending channel corresponding to the first user, scheduling resources for the second user according to a resource demand amount of the second user, relieving the pairing relationship between the first user and the second user, and re-searching for a user to be paired which matches the first user;
when checking of the first uplink data succeeds and checking of the second uplink data fails, performing power boosting on a sending channel corresponding to the second user, scheduling resources for the first user according to a resource demand amount of the first user, relieving the pairing relationship between the first user and the second user, and re-searching for a user to be paired which matches the second user; and
when checking of both the first uplink data and the second uplink data fails, adjusting the pairing relationship of the paired user group according to the number of retransmissions of currently transmitted data of the first user and the second user.

5. The scheduling method for an MU-MIMO system according to claim 4, wherein adjusting the pairing relationship of the paired user group according to the number of retransmissions of currently transmitted data of the first user and the second user, comprises:
when currently transmitted data of the first user and the second user is both newly transmitted data, scheduling resources for the first user and the second user respectively according to resource demand amounts of the first user and the second user, using non-adaptive retransmission when determining that the first user and the second user perform first data retransmission, and recording a first signal-to-noise ratio when the currently transmitted data of the first user is newly transmitted data and a second signal-to-noise ratio when the currently transmitted data of the second user is newly transmitted data;
when the currently transmitted data of the first user and the second user is both first retransmission data, scheduling resources for the first user and the second user respectively according to the resource demand amounts of the first user and the second user when the currently transmitted data is newly transmitted data; recording a third signal-to-noise ratio when the first user performs first data retransmission and a fourth signal-to-noise ratio when the second user performs second data retransmission, and adjusting the pairing relationship of the paired user group according to a magnitude relationship between the third signal-to-noise ratio and the first signal-to-noise ratio and a magnitude relationship between the fourth signal-to-noise ratio and the second signal-to-noise ratio; and
when the currently transmitted data of the first user and the second user is both second retransmission data, scheduling resources for the first user and the second user respectively according to the resource demand amounts of the first user and the second user when performing first data retransmission, relieving the pairing relationship between the first user and the second user, using adaptive retransmission when a user with the lowest signal-to-noise ratio retransmits data upon determining that the currently transmitted data in the first user and the second user is newly transmitted data, and re-searching for a user to be paired which matches the first user and a user to be paired which matches the second user.

6. The scheduling method for an MU-MIMO system according to claim 5, wherein adjusting the pairing relationship of the paired user group according to a magnitude relationship between the third signal-to-noise ratio and the first signal-to-noise ratio and a magnitude relationship between the fourth signal-to-noise ratio and the second signal-to-noise ratio comprises:
when a difference value between the first signal-to-noise ratio and the third signal-to-noise ratio and a difference value between the second signal-to-noise ratio and the fourth signal-to-noise ratio are both greater than a preset third threshold, relieving the pairing relationship between the first user and the second user, and using adaptive retransmission when it is determined that the user with the lowest signal-to-noise ratio of newly transmitted data in the first user and the second user performs second data retransmission; and
when at least one of the difference value between the first signal-to-noise ratio and the third signal-to-noise ratio and the difference value between the second signal-to-noise ratio and the fourth signal-to-noise ratio is smaller than the third threshold, using non-adaptive retransmission when it is determined that the first user and the second user perform second data retransmission.

7. The scheduling method for an MU-MIMO system according to claim 1, wherein scheduling the same resource for the first user and the second user according to a resource demand amount of the paired user group comprises:
acquiring, from a preset orthogonal reference signal group, an orthogonal reference signal pair corresponding to the paired user group;
updating user parameter information of the paired user group according to the orthogonal reference signal pair, and scheduling the same resource for the paired user group; and
updating a resource bitmap according to the scheduling resource of the paired user group, and allocating DCI to the paired user group.

8. A scheduling apparatus for an MU-MIMO system, wherein the apparatus comprises:
an acquisition module, configured to acquire a paired user group, wherein the paired user group comprises a first user and a second user wherein a pairing relationship between the first user and the second user has been determined;
a receiving module, configured to receive first uplink data from the first user, and receive second uplink data from the second user;
a checking module, configured to perform cyclic redundancy check after respectively demodulating the first uplink data and the second uplink data; and
a scheduling module, configured to when the first uplink data and the second uplink data are both successfully checked, schedule the same resource for the first user and the second user according to a resource demand amount of the paired user group; and when checking of the first uplink data and/or the second uplink data fails, adjust the pairing relationship of the paired user group.

9. An electronic apparatus, comprising a memory and a processor, wherein the memory stores a computer program, and the processor is configured to run the computer program to execute the scheduling method for an MU-MIMO system according to any one of claims 1-7.

10. A storage medium, wherein the storage medium stores a computer program, and when executed by a processor, the computer program implements the scheduling method for an MU-MIMO system according to any one of claims 1-7.
